# EUROPEAN PATENT APPLICATION

(11) **EP 4 685 635 A1**
(43) Date of publication of application: **28.01.2026**
(21) Application number: 24774177.0
(22) Date of filing: 20.03.2024
(51) Int. Cl.: G06F 9/451

(54) **MEDIA RESOURCE PROCESSING METHOD AND APPARATUS, AND DEVICE AND STORAGE MEDIUM**

(30) Priority: 20.03.2023 CN 202310281179
(71) Applicant: Beijing Zitiao Network Technology Co., Ltd., Beijing 100190 (CN)
(72) Inventor: CHEN, Haiyun, Chaoyang District Beijing 100028 (CN); YOU, Zhehao, Chaoyang District Beijing 100028 (CN)
(74) Representative: Grünecker Patent- und Rechtsanwälte PartG mbB
(86) International application number: PCT/CN2024/082824
(87) International publication number: WO 2024/193612

(57) **Abstract**

The present disclosure provides a method, apparatus, device, and a storage medium for processing media resources. The method includes: displaying, on a media resource display page, a first media resource in a first display state; and in response to a predetermined sliding applied on the first media resource in the first display state, switching, in the first media resource in the first display state, a media resource area that corresponds to a sliding trajectory area of the predetermined sliding from the first display state to a second display state.

## Description

This application claims priority to Chinese Invention Patent Application No. 202310281179.1, filed on March 20, 2023, and entitled "METHOD, APPARATUS, DEVICE, AND STORAGE MEDIUM FOR PROCESSING MEDIA RESOURCE", the entire content of which is incorporated herein by reference.

### FIELD

The present disclosure relates to the field of data processing, and in particular to a method, apparatus, device, and a storage medium for processing media resources.

### BACKGROUND

With the continuous development of media resource processing technologies, related interactive demands of people for media resources are increasingly diverse. Therefore, how to enrich interactive functions related to the media resources and thus enhance the interactivity of media content of users is a technical problem that needs to be solved urgently at present.

### SUMMARY

In order to solve the above technical problem, embodiments of the present disclosure provide a method for processing media resources.

In a first aspect, the present disclosure provides a method for processing media resources. The method includes:
displaying, on a media resource display page, a first media resource in a first display state; and
in response to a predetermined sliding applied on the first media resource in the first display state, switching, in the first media resource in the first display state, a media resource area that corresponds to a sliding trajectory area of the predetermined sliding from the first display state to a second display state.

In an optional embodiment, displaying the first media resource in the first display state on the media resource display page includes:
displaying, based on at least two canvases, the first media resource on the media resource display page, where the at least two canvases include a first canvas and a second canvas, the first canvas is located beneath the second canvas, the first canvas is configured to render content of the first media resource, and the second canvas is configured to render a predetermined cover layer for covering the content of the first media resource.

In an optional embodiment, switching, in response to the predetermined sliding applied on the first media resource in the first display state, the media resource area in the first media resource in the first display state, which corresponds to the sliding trajectory area of the predetermined sliding, from the first display state to the second display state includes:
determining, in response to the predetermined sliding applied on the first media resource in the first display state, a target rendering area on the second canvas, where the target rendering area includes an area on the second canvas other than the sliding trajectory area; and
re-rendering, based on the target rendering area, the predetermined cover layer on the second canvas.

In an optional embodiment, determining, in response to the predetermined sliding applied on the first media resource in the first display state, the target rendering area on the second canvas includes:
in response to the predetermined sliding applied on the first media resource in the first display state, obtaining a current sliding trajectory area corresponding to the predetermined sliding and a history sliding trajectory area on the second canvas, and determining the current sliding trajectory area and the history sliding trajectory area as the sliding trajectory area; and
determining, based on the sliding trajectory area, the target rendering area on the second canvas.

In an optional embodiment, after determining the current sliding trajectory area and the history sliding trajectory area as the sliding trajectory area, the method further includes:
updating the history sliding trajectory area with the sliding trajectory area.

In an optional embodiment, an interactive control is displayed on the media resource display page, the interactive control is configured to trigger display of a shooting page, and the method further includes:
hiding, in response to a pressing event in the predetermined sliding applied on the first media resource in the first display state, the displayed interactive control on the media resource display page; and
redisplaying, in response to a lifting event corresponding to the pressing event in the predetermined sliding, the interactive control on the media resource display page.

In an optional embodiment, the interactive control includes a shooting control, and the method further includes:
in response to a trigger for the shooting control, displaying the shooting page and obtaining, based on the shooting page, a second media resource; and
displaying, in response to a successful publication message for the second media resource, the first media resource in the second display state on the media resource display page.

In an optional embodiment, before displaying the first media resource in the first display state on the media resource display page, the method further includes:
obtaining, in response to an obtaining operation for the media resource, the first media resource from a server, where the first media resource carries a predetermined type identifier for identifying that the first media resource belongs to a predetermined type.

In an optional embodiment, the method further includes:
switching, in response to current satisfaction of a predetermined ending condition, the media resource area corresponding to the sliding trajectory area from the second display state to the first display state, where the predetermined ending condition includes that a duration from a trigger time point of the predetermined sliding corresponding to the sliding trajectory area to a current time point is not less than a predetermined duration or the number of the sliding trajectory areas is not less than a predetermined number.

In a second aspect, the present disclosure provides an apparatus for processing media resources. The apparatus includes:
a first display module configured to display a first media resource in a first display state on a media resource display page; and
a first switching module configured to in response to a predetermined sliding applied on the first media resource in the first display state, switch, in the first media resource in the first display state, a media resource area that corresponds to a sliding trajectory area of the predetermined sliding from the first display state to a second display state.

In a third aspect, the present disclosure provides a computer-readable storage medium, having instructions stored thereon, where the instructions, when running on a terminal device, cause the terminal device to implement the above method.

In a fourth aspect, the present disclosure provides a device for processing media resources. The device includes: a memory, a processor, and a computer program stored in the memory and runnable on the processor, where the computer program, when executed by the processor, implements the above method.

In a fifth aspect, the present disclosure provides a computer program product. The computer program product includes a computer program/instructions, and the computer program/instructions, when executed by a processor, implement(s) the above method.

Compared with the prior art, the technical solutions provided by the embodiments of the present disclosure at least have the following advantages.

The embodiments of the present disclosure provide a method for processing media resources. Specifically, the first media resource in the first display state is displayed on the media resource display page, and when the predetermined sliding applied on the first media resource in the first display state is received, the media resource area in the first media resource in the first display state, which corresponds to the sliding trajectory area of the predetermined sliding, is switched from the first display state to the second display state.

### BRIEF DESCRIPTION OF THE DRAWINGS

The accompanying drawings here, which are incorporated in the Description and constitute a part of the Description, show embodiments conforming to the present disclosure, and are used to explain the principles of the present disclosure together with the Description.

To describe the technical solutions in the embodiments of the present disclosure or in the prior art more clearly, the following briefly introduces the accompanying drawings required for describing the embodiments or the prior art. Apparently, a person of ordinary skill in the art may still derive other accompanying drawings from these accompanying drawings without creative efforts.
FIG. 1 is a flowchart of a method for processing media resources according to an embodiment of the present disclosure;
FIG. 2 is a schematic diagram of a display page of a first media resource according to an embodiment of the present disclosure;
FIG. 3 is a schematic diagram of another display page of the first media resource according to an embodiment of the present disclosure;
FIG. 4 is a data interaction diagram of a method for processing media resources according to an embodiment of the present disclosure;
FIG. 5 is a schematic structural diagram of an apparatus for processing media resources according to an embodiment of the present disclosure; and
FIG. 6 is a schematic structural diagram of a device for processing media resources according to an embodiment of the present disclosure.

### DETAILED DESCRIPTION

In order to understand the above objects, features and advantages of the present disclosure more clearly, the solutions of the present disclosure will be further described below. It should be noted that the embodiments of the present disclosure and the features in the embodiments may be combined with each other in the absence of conflict.

Many specific details are set forth in the following description to fully understand the present disclosure, but the present disclosure may also be implemented in other ways different from those described herein. Obviously, the embodiments in the Description are only part of, not all of the embodiments of the present disclosure.

In order to enrich the interactive functions related to media resources, the embodiments of the present disclosure provide a method for processing media resources. Specifically, a first media resource in a first display state is displayed on a media resource display page, and when a predetermined sliding applied on the first media resource in the first display state is received, in the first media resource in the first display state, a media resource area corresponds to a sliding trajectory area of the predetermined sliding is switched from the first display state to a second display state. It can be seen that in the embodiments of the present disclosure, by triggering the predetermined sliding applied on the first media resource in the first display state, the effect of switching the display state of the corresponding media resource area based on the sliding trajectory area can be achieved, and the interactive functions related to the media resource are enriched, thereby enhancing the interactivity of works.

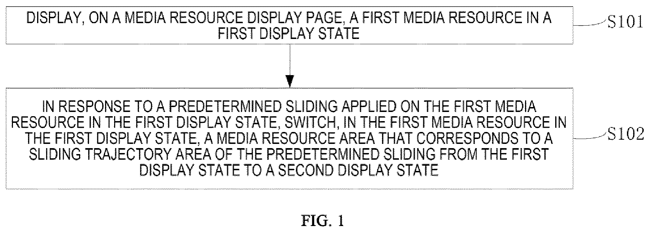

Therefore, the embodiments of the present disclosure provide a method for processing media resources. With reference to FIG. 1, which is a flowchart of a method for processing media resources according to an embodiment of the present disclosure, the method includes the following steps.

In S101, a first media resource in a first display state is displayed on a media resource display page.

The method for processing the media resources provided by the embodiments of the present disclosure is applied to a client side, specifically, the client side may be deployed on a terminal device, and the terminal device may include a smart phone, a notebook computer, a personal computer (PC), and the like.

The first media resource in the embodiment of the present disclosure may be any type of media resource, such as a video, a graph-text, a picture and a text.

In an optional embodiment, on the media resource display page, the first media resource may be displayed based on at least two canvases to realize the display of the first media resource in the first display state. The first display state may include a state in which content in the first media resource is displayed in a cover way, such as a state in which a predetermined cover layer is displayed on the first media resource, and the predetermined cover layer may be a Gaussian blur mask layer, a mosaic mask layer and other cover patterns. It can be understood that a user publishing the media resource may set a visible range of the first media resource, that is, the user meeting the visible range can view and interact with the first media resource.

The at least two canvases include a first canvas and a second canvas, the first canvas is located beneath the second canvas, the first canvas is configured to render the content of the first media resource, and the second canvas is configured to render the predetermined cover layer for covering the content of the first media resource.

In an optional embodiment, the first media resource is obtained from a server in response to an obtaining operation for the media resource, where the first media resource carries a predetermined type identifier for identifying that the first media resource belongs to a predetermined type. Specifically, the media resource belonging to the predetermined type refers to a media resource type that is covered by the predetermined cover layer when the media resource is displayed on the client side. The predetermined cover layer may be a cover layer with a cover effect such as mosaic.

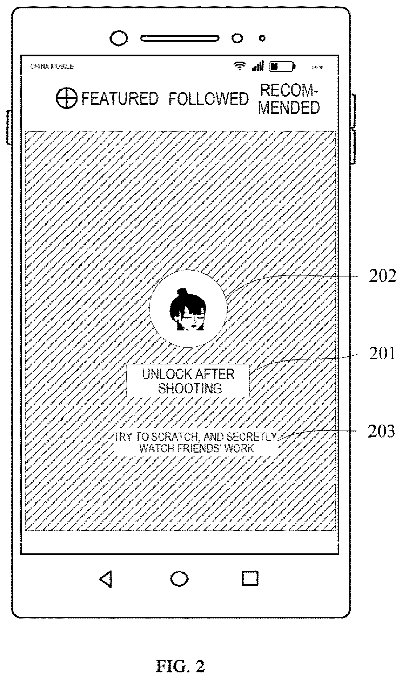

In the embodiment of the present disclosure, after obtaining the first media resource from the server, the first canvas may be configured to render the content of the first media resource, and the second canvas may be configured to render the predetermined cover layer. In addition, the first canvas is located beneath the second canvas, when the first media resource is displayed based on the first canvas and the second canvas, the effect that the content of the first media resource is covered in the display process is presented. As shown in FIG. 2, which is a schematic diagram of a media resource display page according to an embodiment of the present disclosure, the predetermined cover layer is rendered on the media resource display page to cover the display content of the first media resource. Assuming that the first media resource is a video, in the process of playing the video, the display effect that the video playback content is covered by the cover layer such as mosaic is presented.

In an optional embodiment, the way of rendering the predetermined cover layer on the second canvas may include drawing a mask layer on the second canvas first, and then adding a predetermined cover pattern on the mask layer. The predetermined cover pattern may include a cover pattern such as mosaic.

In S102, in response to a predetermined sliding applied on the first media resource in the first display state, in the first media resource in the first display state, a media resource area that corresponds to a sliding trajectory area of the predetermined sliding is switched from the first display state to a second display state.

The second display state may include a clear display state of the content in the first media resource, such as a display state in which the cover layer is not set.

In an optional embodiment, in order to present the effect of partially displaying the first media resource by removing the cover layer following the sliding, the predetermined cover layer may be redrawn on the area on the second canvas other than the sliding trajectory area, and the predetermined cover layer is not redrawn for the sliding trajectory area on the second canvas.

In the embodiment of the present disclosure, in the process of displaying the first media resource based on the at least two canvases, if the predetermined sliding on the media resource display page is received, a target rendering area on the second canvas is first determined, and then the predetermined cover layer is re-rendered on the second canvas based on the target rendering area, that is, the operation of re-rendering the predetermined cover layer is not performed for the sliding trajectory area. The target rendering area includes the area on the second canvas other than the sliding trajectory area.

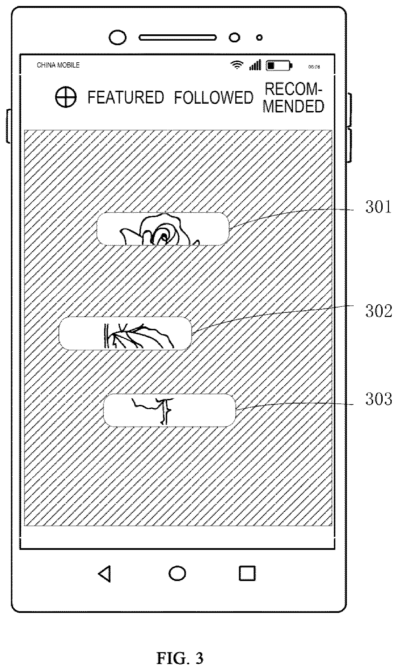

In an optional embodiment, the predetermined sliding may be triggered several times in succession on the media resource display page, and the sliding trajectory area on the second canvas may include a current sliding trajectory area and a history sliding trajectory area, where the current sliding trajectory area refers to a sliding trajectory area corresponding to a currently received predetermined sliding applied on the first media resource in the first display state, such as a current sliding trajectory area 301 shown in FIG. 3; and the history sliding trajectory area may be a sliding trajectory area corresponding to a sliding triggered before the predetermined sliding, such as history sliding trajectory areas 302 and 303 shown in FIG. 3. For example, when a third predetermined sliding applied on the first media resource in the first display state is received, a sliding trajectory area corresponding to the third predetermined sliding may be determined as the current sliding trajectory area, while sliding trajectory areas corresponding to the former two predetermined sliding may be determined as the history sliding trajectory areas.

In practical application, in response to the predetermined sliding applied on the first media resource in the first display state, the current sliding trajectory area corresponding to the predetermined sliding and the history sliding trajectory area on the second canvas are obtained, and the current sliding trajectory area and the history sliding trajectory area are determined as the sliding trajectory area. Then, the target rendering area on the second canvas is determined based on the determined sliding trajectory area. Specifically, the area on the second canvas other than the determined sliding trajectory area is determined as the target rendering area on the second canvas.

In an optional embodiment, after the current sliding trajectory area and the history sliding trajectory area are determined as the sliding trajectory area, the history sliding trajectory area of the second canvas may also be updated by using the determined sliding trajectory area, that is, the sliding trajectory area determined at this time is determined as the latest history sliding trajectory area for responding to the predetermined sliding triggered later.

In the embodiments of the present disclosure, after the target rendering area on the second canvas is determined, the predetermined cover layer is re-rendered on the second canvas based on the target rendering area. Specifically, in the target rendering area on the second canvas, the predetermined cover layer is re-rendered, so as to achieve the display effect of removing the cover layer following the predetermined sliding to reproduce part of the content of the first media resource. As shown in FIG. 3, which is a schematic diagram of another media resource display page according to an embodiment of the present disclosure, the content of the first media resource is partially displayed on the display page of the first media resource.

In an optional embodiment, when a lifting operation of the predetermined sliding on the display page of the first media resource is detected, the re-rendering of the predetermined cover layer on the second canvas based on the target rendering area on the second canvas may be triggered.

In another optional embodiment, in order to improve response efficiency for the predetermined sliding triggered by the user, a response may also be made to the predetermined sliding on the display page of the first media resource according to a predetermined period. Specifically, in the process of triggering the predetermined sliding by the user, the target rendering area on the second canvas is determined according to the predetermined period, then the predetermined cover layer is re-rendered on the second canvas based on the target rendering area, and the display effect of erasing the cover layer in real time following the sliding is given to the user, thereby enhancing the interactivity.

In the embodiment of the present disclosure, in the process of re-rendering the predetermined cover layer on the second canvas, the content of the first media resource is rendered by using the first canvas, so as to realize the interactive effect that the user erases the cover layer by triggering the predetermined sliding on the display page in the display process of the first media resource. For example, assuming that the first media resource is a video, in the video playback process, the user erases the cover layer on the video through the predetermined sliding, thereby triggering the interactive effect of partially displaying the video content.

In an optional embodiment, in response to current satisfaction of the predetermined ending condition, the media resource area corresponding to the sliding trajectory area on the first media resource in the first display state may be switched from the second display state to the first display state. The predetermined ending condition may include that the duration from a trigger time point of the predetermined sliding corresponding to the sliding trajectory area to the current time point is not less than a predetermined duration. For example, when the trigger duration of the predetermined sliding reaches 1 second, the media resource picture area corresponding to the sliding trajectory area of the predetermined sliding is switched from a clear display state to a cover display state. The predetermined ending condition may also include that the number of the sliding trajectory areas is not less than a predetermined number. For example, when more than three sliding trajectory areas are displayed on the display page of the first media resource in the first display state, the media resource areas corresponding to the sliding trajectory areas are switched from the clear display state to the cover display state.

In the method for processing media resources provided by the embodiments of the present disclosure, the first media resource in the first display state is displayed on the media resource display page, and when the predetermined sliding applied on the first media resource in the first display state is received, the media resource area in the first media resource in the first display state, which corresponds to the sliding trajectory area of the predetermined sliding, is switched from the first display state to the second display state. It can be seen that in the embodiments of the present disclosure, by triggering the predetermined sliding applied on the first media resource in the first display state, the effect of switching the display state of the corresponding media resource area based on the sliding trajectory area can be achieved, and the interactive functions related to the media resource are enriched, thereby enhancing the interactivity of the works.

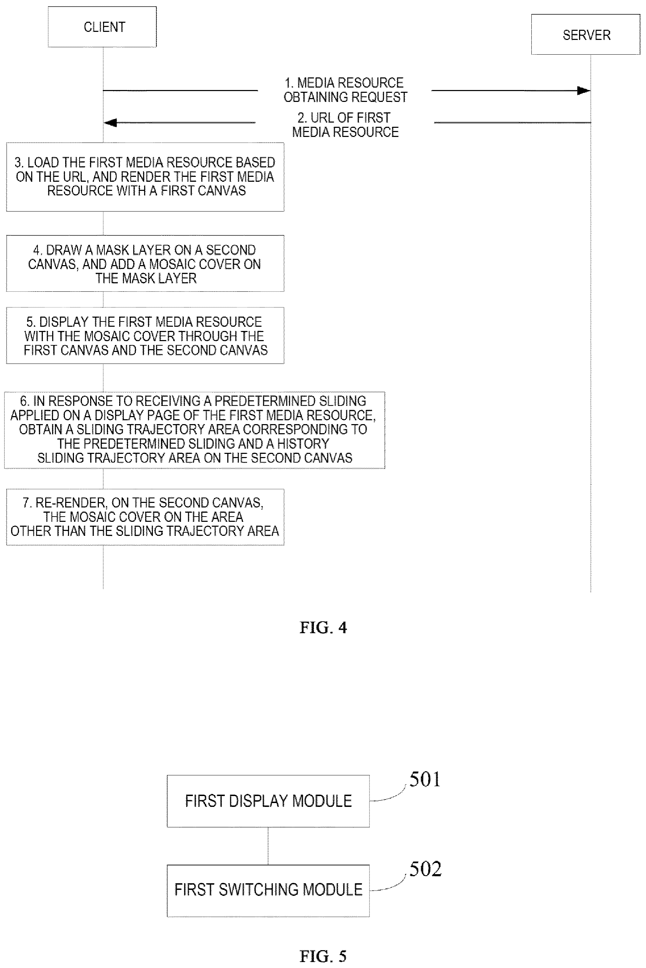

In order to facilitate further understanding of the method for processing media resources, the embodiment of the present disclosure provides a data interaction diagram of the method for processing media resources, as shown in FIG. 4. Taking the first media resource as a picture, the predetermined cover layer may be a mosaic cover or a Gaussian blur cover layer, etc., and the embodiment takes the mosaic cover as an example.

Specifically, the client side sends a media resource obtaining request to the server when receiving an obtaining operation for the media resource triggered by the user. After receiving the media resource obtaining request, the server returns a uniform resource locator (URL) of the first media resource to the client side, and the client side loads the first media resource based on the URL and renders the first media resource with the first canvas. In addition, after obtaining the URL of the first media resource, the client side determines that the first media resource carries a predetermined type identifier, that is, the first media resource belongs to the predetermined type, then a mask layer is drawn on the second canvas, the mosaic cover is added on the mask layer, and the first media resource with the mosaic cover is displayed through the first canvas and the second canvas.

In practical application, when receiving the predetermined sliding on the display page of the first media resource, the client side obtains the sliding trajectory area corresponding to the predetermined sliding and the history sliding trajectory area on the second canvas, and re-renders the mosaic cover on the area on the second canvas other than the above sliding trajectory area, and the effect of erasing the mosaic cover following the sliding and re-displaying part of the content of the first media resource is presented.

In the embodiment of the present disclosure, by triggering the sliding on the display page of the first media resource rendered with the mosaic cover, the effect of removing the mosaic cover of the first media resource based on the sliding trajectory can be realized, and the interactive functions related to the media resource are enriched.

On the basis of the above embodiment, in order to further enrich the interactive functions of the media resource, an interactive control may also be displayed on the display page of the first media resource, and the interactive control may include a shooting control. As shown in FIG. 2, the shooting control 201 is configured to trigger the display of a shooting page, so that the user can shoot the media resource based on the shooting page. After the user shoots the media resource or performs other predetermined interactive operations, all picture areas of the first media resource are switched to a third display state, such as a clear display state.

In an optional embodiment, in response to a pressing event in the predetermined sliding applied on the first media resource in the first display state, the displayed interactive control is hidden on the media resource display page. In addition, the interactive control is re-displayed on the media resource display page in response to the lifting event corresponding to the pressing event in the above predetermined sliding.

In order to facilitate the interactive operation by the user, the display of the shooting control on the media resource display page may be controlled through the pressing event and the lifting event of the predetermined sliding. When the pressing event of the predetermined sliding is received, the shooting control may be hidden, that is, not displayed on the media resource display page, in order to reduce the interference to the response to the predetermined sliding. When the lifting event of the predetermined sliding is received, it means that the predetermined sliding has been completed, and the shooting control may be displayed on the media resource display page again at this time.

In some embodiments, the shooting control may also remain displayed on the media resource display page, for example, in response to the pressing event in the predetermined sliding applied on the first media resource in the first display state, the shooting control may be set outside the picture area of the media resource or displayed in a draggable manner, or other original buttons in the media resource display page may be replaced with the shooting control, thereby facilitating shooting of the works.

In an optional embodiment, on the media resource display page, the identifier of a publishing user of the first media resource, such as an image identifier 202 of the publishing user, and interactive prompt information 203, such as "try to scratch, secretly watch friends' works" shown in FIG. 2, may also be displayed. Similarly, in order to reduce the interference to the response to the predetermined sliding, the embodiment of the present disclosure may also control the display of the identifier of the publishing user and the interactive prompt information on the media resource display page through the pressing event and lifting event of the predetermined sliding, and the specific control way may refer to the above content, and will not be repeated here.

In addition, for the shooting control displayed on the media resource display page, if a trigger for the shooting control is received, the shooting page may be displayed, and a second media resource may be obtained based on the shooting page. For the obtained second media resource, the user may edit and publish the same, or publish the same directly. If a successful publication message for the second media resource is received, it may jump back to the display page of the first media resource, the first media resource is displayed based on the first canvas, that is, the predetermined cover layer is no longer rendered on the second canvas, and the user may directly view the content of the first media resource on the display page of the first media resource, thereby realizing the effect of unlocking the content display of the first media resource by means of shooting and publishing the media resource, and further enriching the interactive functions of the media resource.

Based on the above method embodiments, the present disclosure further provides an apparatus for processing media resources. Referring to FIG. 5, which is a schematic structural diagram of an apparatus for processing media resources according to an embodiment of the present disclosure. The apparatus includes:
a first display module 501 configured to display a first media resource in a first display state on a media resource display page; and
a first switching module 502 configured to switch, in response to a predetermined sliding applied on the first media resource in the first display state, a media resource area in the first media resource in the first display state, which corresponds to a sliding trajectory area of the predetermined sliding, from the first display state to a second display state.

In an optional embodiment, the first display module is specifically configured to:
display, based on at least two canvases, the first media resource on the media resource display page, where the at least two canvases include a first canvas and a second canvas, the first canvas is located beneath the second canvas, the first canvas is configured to render content of the first media resource, and the second canvas is configured to render a predetermined cover layer for covering the content of the first media resource.

In an optional embodiment, the first switching module includes:
a first determination sub-module configured to determine, in response to the predetermined sliding applied on the first media resource in the first display state, a target rendering area on the second canvas, where the target rendering area includes an area on the second canvas other than the sliding trajectory area; and
a rendering sub-module configured to re-render, based on the target rendering area, the predetermined cover layer on the second canvas.

In an optional embodiment, the first determination sub-module includes:
an obtaining sub-module configured to in response to the predetermined sliding applied on the first media resource in the first display state, obtain a current sliding trajectory area corresponding to the predetermined sliding and a history sliding trajectory area on the second canvas, and determine the current sliding trajectory area and the history sliding trajectory area as the sliding trajectory area; and
a second determination sub-module configured to determine, based on the sliding trajectory area, the target rendering area on the second canvas.

In an optional embodiment, the apparatus further includes:
an update module configured to update the history sliding trajectory area with the sliding trajectory area.

In an optional embodiment, an interactive control is displayed on the media resource display page, the interactive control is configured to trigger display of a shooting page, and the apparatus further includes:
a display hiding module configured to hide, in response to a pressing event in the predetermined sliding applied on the first media resource in the first display state, the displayed interactive control on the media resource display page; and
a redisplay module configured to redisplay, in response to a lifting event corresponding to the pressing event in the predetermined sliding, the interactive control on the media resource display page.

In an optional embodiment, the interactive control includes a shooting control, and the apparatus further includes:
a shooting module configured to in response to a trigger for the shooting control, display the shooting page and obtain, based on the shooting page, a second media resource; and
a second display module configured to display, in response to a successful publication message for the second media resource, the first media resource in the second display state on the media resource display page.

In an optional embodiment, the apparatus further includes:
an obtaining module configured to obtain, in response to an obtaining operation for the media resource, the first media resource from a server, where the first media resource carries a predetermined type identifier, and the predetermined type identifier is configured to identify that the first media resource belongs to a predetermined type.

In an optional embodiment, the apparatus further includes:
a second switching module configured to switch, in response to current satisfaction of a predetermined ending condition, the media resource area corresponding to the sliding trajectory area from the second display state to the first display state.

In the apparatus for processing media resources provided by the embodiments of the present disclosure, the first media resource in the first display state is displayed on the media resource display page, and when the predetermined sliding applied on the first media resource in the first display state is received, the media resource area in the first media resource in the first display state, which corresponds to the sliding trajectory area of the predetermined sliding, is switched from the first display state to the second display state. It can be seen that in the embodiments of the present disclosure, by triggering the predetermined sliding applied on the first media resource in the first display state, the effect of switching the display state of the corresponding media resource area based on the sliding trajectory area can be achieved, and the interactive functions related to the media resource are enriched, thereby enhancing the interactivity of the works.

In addition to the above method and apparatus, the embodiments of the present disclosure further provide a computer-readable storage medium storing instructions therein, where the instructions, when running on a terminal device, cause the terminal device to implement the method for processing media resources according to the embodiment of the present disclosure.

The embodiments of the present disclosure further provide a computer program product. The computer program product includes a computer program/instructions, where the computer program/instructions, when executed by a processor, implement(s) the method for processing media resources according to the embodiment of the present disclosure.

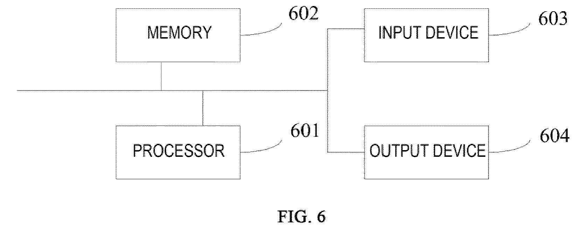

In addition, the embodiments of the present disclosure further provide a device for processing media resources. Referring to FIG. 6, the device may include:
a processor 601, a memory 602, an input device 603 and an output device 604. The number of processors 601 in the device for processing the media resources may be one or more, and one processor is taken as an example in FIG. 6. In some embodiments of the present disclosure, the processor 601, the memory 602, the input device 603 and the output device 604 may be connected by a bus or in other ways. Here, the connection by the bus is taken as an example in FIG. 6.

The memory 602 may be configured to store software programs and modules. The processor 601 executes various functional applications and data processing of the device for processing the media resources by running the software programs and modules stored in the memory 602. The memory 602 may mainly include a program storage area and a data storage area. The program storage area may store an operating system, applications required by at least one function, and the like. In addition, the memory 602 may include a high-speed random-access memory and may further include a non-volatile memory, such as at least one magnetic disk storage device, a flash memory device, or other volatile solid-state memory devices. The input device 603 may be configured to receive input numeric or character information and generate a signal input related to user settings and function controls for the device for processing the media resources.

Specifically, in the present embodiment, the processor 601 will load executable files corresponding to processes of one or more application programs into the memory 602 according to the following instructions, and the processor 601 will run the application programs stored in the memory 602, so as to achieve various functions of the device for processing the media resources above.

It should be noted that, relational terms such as "first" and "second" used herein are used merely to distinguish an entity or an operation from another entity or another operation, and not to require or imply any substantial relation or order between these entities or operations. Moreover, terms "include", "contain" or any variation thereof are intended to cover nonexclusive containing, such that a process, a method, an item or a device containing a series of elements not only includes these elements, but also includes other elements that are not set forth specifically, or also includes an inherent element of such a process, method, item or device. In the absence of further limitation, an element defined by a phrase "include a" does not exclude the existence of other same elements in the process, method, item or device including said element.

The above only describes specific implementations of the present disclosure, which enable those skilled in the art to understand or implement the present disclosure. The various modifications to these embodiments will be obvious to those skilled in the art, and the general principles defined herein may be implemented in other embodiments without departing from the spirit or scope of the present disclosure. Therefore, the present disclosure will not be limited to these embodiments described herein, but should be consistent with the widest scope conforming to the principles and novelty features disclosed herein.

## Claims

1. A method for displaying media resources, comprising:
displaying, on a media resource display page, a first media resource in a first display state; and
in response to a predetermined sliding applied on the first media resource in the first display state, switching, in the first media resource in the first display state, a media resource area that corresponds to a sliding trajectory area of the predetermined sliding from the first display state to a second display state.

2. The method of claim 1, wherein displaying, on the media resource display page, the first media resource in the first display state comprises:
displaying, on the media resource display page, the first media resource based on at least two canvases, wherein the at least two canvases comprise a first canvas and a second canvas, the first canvas is located beneath the second canvas, the first canvas is configured to render content of the first media resource, the second canvas is configured to render a predetermined cover layer for covering the content of the first media resource.

3. The method of claim 2, wherein in response to a predetermined sliding applied on the first media resource in the first display state, switching, in the first media resource in the first display state, a media resource area that corresponds to a sliding trajectory area of the predetermined sliding from the first display state to a second display state comprises:
determining, in response to the predetermined sliding applied on the first media resource in the first display state, a target rendering area on the second canvas, wherein the target rendering area comprises an area on the second canvas other than the sliding trajectory area; and
re-rendering, based on the target rendering area, the predetermined cover layer on the second canvas.

4. The method of claim 3, wherein determining, in response to the predetermined sliding applied on the first media resource in the first display state, the target rendering area on the second canvas comprises:
in response to the predetermined sliding applied on the first media resource in the first display state, obtaining a current sliding trajectory area corresponding to the predetermined sliding and a history sliding trajectory area on the second canvas, and determining the current sliding trajectory area and the history sliding trajectory area as the sliding trajectory area; and
determining, based on the sliding trajectory area, the target rendering area on the second canvas.

5. The method of claim 4, wherein after determining the current sliding trajectory area and the history sliding trajectory area as the sliding trajectory area, the method further comprises:
updating the history sliding trajectory area with the sliding trajectory area.

6. The method of claim 1, wherein an interactive control is displayed on the media resource display page, the interactive control is configured to trigger display of a shooting page, and the method further comprises:
hiding, in response to a pressing event in the predetermined sliding applied on the first media resource in the first display state, the displayed interactive control on the media resource display page; and
redisplaying, in response to a lifting event corresponding to the pressing event in the predetermined sliding, the interactive control on the media resource display page.

7. The method of claim 6, wherein the interactive control comprises a shooting control, and the method further comprises:
in response to a trigger for the shooting control, displaying the shooting page and obtaining, based on the shooting page, a second media resource; and
in response to a successful publication message for the second media resource, displaying, on the media resource display page, the first media resource in the second display state.

8. The method of claim 1, wherein before displaying the first media resource in the first display state on the media resource display page, the method further comprises:
obtaining, in response to an obtaining operation for the media resource, the first media resource from a server, wherein the first media resource carries a predetermined type identifier for identifying that the first media resource belongs to a predetermined type.

9. The method of claim 1, further comprising:
switching, in response to current satisfaction of a predetermined ending condition, the media resource area corresponding to the sliding trajectory area from the second display state to the first display state, wherein the predetermined ending condition comprises that a duration from a trigger time point of the predetermined sliding corresponding to the sliding trajectory area to a current time point is not less than a predetermined duration, or a number of the sliding trajectory areas is not less than a predetermined number.

10. An apparatus for processing media resources, comprising:
a first display module configured to display, on a media resource display page, a first media resource in a first display state; and
a first switching module configured to in response to a predetermined sliding applied on the first media resource in the first display state, switch, in the first media resource in the first display state, a media resource area that corresponds to a sliding trajectory area of the predetermined sliding from the first display state to a second display state.

11. A computer-readable storage medium, having instructions stored thereon, the instructions, when running on a terminal device, causing the terminal device to implement the method according to any of claims 1 to 9.

12. A device for processing media resources, comprising: a memory, a processor, and a computer program stored in the memory and runnable on the processor, the computer program, when executed by the processor, implementing acts comprising:
displaying, on a media resource display page, a first media resource in a first display state; and
in response to a predetermined sliding applied on the first media resource in the first display state, switching, in the first media resource in the first display state, a media resource area that corresponds to a sliding trajectory area of the predetermined sliding from the first display state to a second display state.

13. The device of claim 12, wherein displaying, on the media resource display page, the first media resource in the first display state comprises:
displaying, on the media resource display page, the first media resource based on at least two canvases, wherein the at least two canvases comprise a first canvas and a second canvas, the first canvas is located beneath the second canvas, the first canvas is configured to render content of the first media resource, the second canvas is configured to render a predetermined cover layer for covering the content of the first media resource.

14. The device of claim 12, wherein in response to a predetermined sliding applied on the first media resource in the first display state, switching, in the first media resource in the first display state, a media resource area that corresponds to a sliding trajectory area of the predetermined sliding from the first display state to a second display state comprises:
determining, in response to the predetermined sliding applied on the first media resource in the first display state, a target rendering area on the second canvas, wherein the target rendering area comprises an area on the second canvas other than the sliding trajectory area; and
re-rendering, based on the target rendering area, the predetermined cover layer on the second canvas.

15. The device of claim 14, wherein determining, in response to the predetermined sliding applied on the first media resource in the first display state, the target rendering area on the second canvas comprises:
in response to the predetermined sliding applied on the first media resource in the first display state, obtaining a current sliding trajectory area corresponding to the predetermined sliding and a history sliding trajectory area on the second canvas, and determining the current sliding trajectory area and the history sliding trajectory area as the sliding trajectory area; and
determining, based on the sliding trajectory area, the target rendering area on the second canvas.

16. The device of claim 15, wherein after determining the current sliding trajectory area and the history sliding trajectory area as the sliding trajectory area, the acts further comprise:
updating the history sliding trajectory area with the sliding trajectory area.

17. The device of claim 12, wherein an interactive control is displayed on the media resource display page, the interactive control is configured to trigger display of a shooting page, and the method further comprises:
hiding, in response to a pressing event in the predetermined sliding applied on the first media resource in the first display state, the displayed interactive control on the media resource display page; and
redisplaying, in response to a lifting event corresponding to the pressing event in the predetermined sliding, the interactive control on the media resource display page.

18. The device of claim 17, wherein the interactive control comprises a shooting control, and the method further comprises:
in response to a trigger for the shooting control, displaying the shooting page and obtaining, based on the shooting page, a second media resource; and
in response to a successful publication message for the second media resource, displaying, on the media resource display page, the first media resource in the second display state.

19. The device of claim 12, wherein before displaying the first media resource in the first display state on the media resource display page, the acts further comprise:
obtaining, in response to an obtaining operation for the media resource, the first media resource from a server, wherein the first media resource carries a predetermined type identifier for identifying that the first media resource belongs to a predetermined type.

20. The device of claim 12, wherein the acts further comprise: switching, in response to current satisfaction of a predetermined ending condition, the media resource area corresponding to the sliding trajectory area from the second display state to the first display state, wherein the predetermined ending condition comprises that a duration from a trigger time point of the predetermined sliding corresponding to the sliding trajectory area to a current time point is not less than a predetermined duration or the number of the sliding trajectory areas is not less than a predetermined number.
